(19) Europäisches Patentamt
European Patent Office
Office européen des brevets

(11) **EP 4 563 527 A1**

(12) **EUROPEAN PATENT APPLICATION**
published in accordance with Art. 153(4) EPC


(43) Date of publication:
**04.06.2025 Bulletin 2025/23**

(21) Application number: **23846341.8**

(22) Date of filing: **20.07.2023**

(51) International Patent Classification (IPC):
***C01B 32/05*** *(2017.01)* ***B01J 20/20*** *(2006.01)*
***B01J 20/28*** *(2006.01)* ***B01J 20/30*** *(2006.01)*

(52) Cooperative Patent Classification (CPC):
**B01J 20/20; B01J 20/28; B01J 20/30; C01B 32/05**

(86) International application number:
**PCT/JP2023/026518**

(87) International publication number:
**WO 2024/024610 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.07.2022 JP 2022119926**



(71) Applicant: **Kuraray Co., Ltd.**
**Kurashiki-shi, Okayama 710-0801 (JP)**

(72) Inventors:
- **KOBAYASHI, Shohei**
  **Kurashiki-shi, Okayama 710-0801 (JP)**
- **KAMAE, Yoshiki**
  **Kurashiki-shi, Okayama 710-0801 (JP)**
- **TAKAI, Jun**
  **Kurashiki-shi, Okayama 710-0801 (JP)**

(74) Representative: **Müller-Boré & Partner Patentanwälte PartG mbB**
**Friedenheimer Brücke 21**
**80639 München (DE)**


(54) **POROUS CARBON AND PRODUCTION METHOD THEREOF**


(57) The present invention relates to a porous carbon in which a slope of an approximate straight line obtained by converting a change in pressure of nitrogen until reaching an adsorption equilibrium at each prescribed relative pressure in measurement of a nitrogen adsorption isotherm into a mass transfer coefficient using the LDF approximation and linearly approximating a relationship between a relative pressure and a mass transfer coefficient at a relative pressure of $1.0 \times 10^{-4}$ or more and $1.0 \times 10^{-3}$ or less is 4 or more, and
a pore volume of pores having a pore diameter of 2 nm or more and 200 nm or less calculated from the nitrogen adsorption isotherm by a BJH method is 0.8 $cm^3/g$ or more.


[Figure 1]

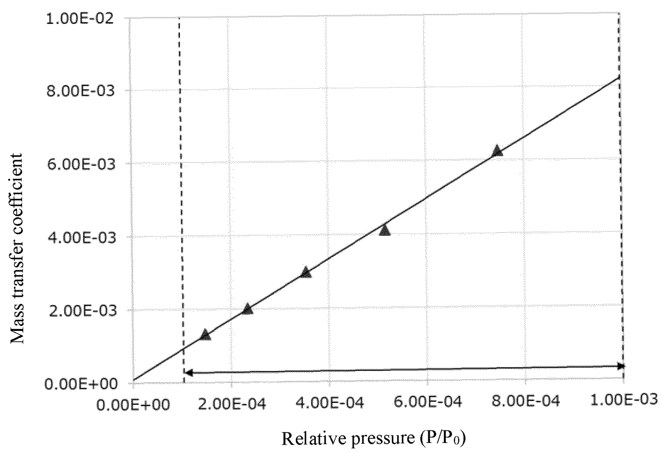





Processed by Luminess, 75001 PARIS (FR)

## Description

CROSS-REFERENCE TO RELATED APPLICATIONS

The present patent application claims Paris Convention priority based on Japanese Patent Application No. 2022-119926 (filed on July 27, 2022), the entire content of which is incorporated herein by reference.

TECHNICAL FIELD

The present invention relates to porous carbon and a method for producing the same.

BACKGROUND ART

Activated carbon or porous carbon has been experimentally used as adsorbents for proteins or viruses.

For example, Patent Document 1 discloses that a porous carbon material prepared using a plant-derived material as a raw material can adsorb proteins such as albumin. In addition, Patent Document 2 discloses that a porous carbon material prepared using a plant-derived material as a raw material can adsorb and remove viruses. Patent Document 3 discloses that activated carbon adsorbs proteins such as albumin.

Further, Patent Document 4 discloses an adsorbing/desorbing agent comprising porous carbon having micropores, and mesopores and/or macropores, wherein each of the three types of pores has an outer wall made of a carbonaceous wall and the micropores are formed so as to communicate with the mesopores and/or the macropores, the adsorbing/desorbing agent being characterized in that in a range of $1.0 \times 10^{-5} \leq x \leq 1.0 \times 10^{-4}$, the relationship between x and y satisfies the formula:

$$y \geq 1.67 \times 10^{-1}x + 2.33 \times 10^{-6}$$

where x is a relative pressure ($P/P_0$) and y is a mass transfer coefficient ($K_{sap}$) when measured at 77 K using nitrogen as an adsorptive gas

PRIOR ART DOCUMENT

PATENT DOCUMENTS

Patent Document 1: JP-A-2011-042569
Patent Document 2: JP-A-2012-187571
Patent Document 3: JP-A-2018-001057
Patent Document 4: WO 2014/142187 A
Patent Document 5: JP-A-2016-041656

SUMMARY OF THE INVENTION

PROBLEMS TO BE SOLVED BY THE INVENTION

However, according to the studies conducted by the present inventors, there has been a case where the porous carbon materials and the activated carbon described in Patent Documents 1 to 3 do not have sufficient performance for adsorption performance of proteins, viruses, or the like, especially for adsorption performance in a short time.

Patent Document 4 discloses that the adsorbing/desorbing agent containing porous carbon disclosed therein has a large value of a mass transfer coefficient in a relative pressure range of $1.0 \times 10^{-5} \leq x \leq 1.0 \times 10^{-4}$ as compared with an adsorbing/desorbing agent containing zeolite or activated carbon as a comparative material, and thus gas or liquid can be smoothly adsorbed. Patent Document 5 discloses porous carbon having mesopores, micropores, and a carbonaceous wall constituting an outer wall of the mesopores, in which the carbonaceous wall forms a three-dimensional network structure, and discloses that when the porous carbon is used as an adsorbent agent for a gas, a gas adsorbing ability is improved because the gas flow is not hindered. However, Patent Documents 4 and 5 do not disclose the performance of adsorbing a molecule or virus having a relatively large diameter.

A problem of the present invention is to provide porous carbon that exhibits superior adsorption characteristics to molecules or viruses having a relatively large diameter (for example, 2 to 200 nm).

SOLUTIONS TO THE PROBLEMS

The present inventors conducted detailed studies on porous carbon to solve the above problem, and have accomplished the present invention. That is, the present invention includes the following preferred embodiments.

[1] Porous carbon in which a slope of an approximate straight line obtained by converting a change in pressure of nitrogen until reaching an adsorption equilibrium at each prescribed relative pressure in measurement of a nitrogen adsorption isotherm into a mass transfer coefficient using the LDF approximation and linearly approximating a relationship between a relative pressure and a mass transfer coefficient at a relative pressure of $1.0 \times 10^{-4}$ or more and $1.0 \times 10^{-3}$ or less is 4 or more, and
a pore volume of pores having a pore diameter of 2 nm or more and 200 nm or less calculated from the nitrogen adsorption isotherm by a BJH method is 0.8 $cm^3/g$ or more.
[2] The porous carbon according to the above [1], wherein a value of a mass transfer coefficient at a relative pressure of $1.0 \times 10^{-3}$ is $3.0 \times 10^{-3}$ or more on the approximate straight line.
[3] The porous carbon according to the above [1] or [2], wherein the porous carbon has a bulk density of less than 0.10 $g/cm^3$.
[4] A method for producing the porous carbon according to any one of the above [1] to [3], the method comprising:

(1) a step of obtaining a mixture comprising a carbon source and a calcium compound;
(2) a step of heat-treating the mixture in an inert gas atmosphere to phase-separate the carbon source and the calcium compound;
(3) a step of heat-treating the phase-separated mixture in an inert gas atmosphere to obtain a carbonized product; and
(4) a step of removing the calcium compound from the carbonized product.

[5] The method according to the above [4], wherein a temperature in the phase separation step of the step (2) is 150°C or more and 500°C or less.
[6] The porous carbon according to any one of the above [1] to [3], which is an adsorbent.
[7] The porous carbon according to any one of the above [1] to [3] and [6], which is an adsorbent for adsorbing a protein.
[8] The porous carbon according to any one of the above [1] to [3] and [6], which is an adsorbent for adsorbing a virus.

EFFECTS OF THE INVENTION

According to the present invention, porous carbon that exhibits superior adsorption characteristics to molecules or viruses having a relatively large diameter (for example, 2 to 200 nm) can be provided. Thus, when the porous carbon of the present invention is used, for example, as a purification material in the production of pharmaceuticals or foods, as a material for removing large molecules or viruses from waste liquid (wastewater), or as a material for an antiviral spray agent or an antiviral mask, superior properties can be obtained. Herein, the diameter of a molecule means an average molecular diameter, and the diameter of a virus means an average diameter of the virus.

BRIEF DESCRIPTION OF THE DRAWING

Fig. 1 is a graph showing a relationship between a relative pressure and a mass transfer coefficient of the porous carbon in Example 2.

DETAILED DESCRIPTION

Hereinafter, embodiments of the present invention will be described in detail. It is noted that the following is a description that exemplifies embodiments of the present invention, and the present invention is not intended to be limited to the following embodiments.

[Porous Carbon]

In the measurement of the nitrogen adsorption isotherm of the porous carbon of the present invention, the change in pressure of nitrogen until the adsorption equilibrium is reached at each prescribed relative pressure ($P/P_0$) is converted into a mass transfer coefficient using a linear driving force (LDF) approximation, the relationship between a relative pressure and a mass transfer coefficient at a relative pressure of $1.0 \times 10^{-4}$ or more and $1.0 \times 10^{-3}$ or less is linearly approximated, and the slope of the approximate straight line obtained thereby is 4 or more. Here, P is an adsorption equilibrium pressure, and $P_0$ is a saturated vapor pressure. The porous carbon of the present invention has a pore volume of pores having a pore diameter of 2 nm or more and 200 nm or less calculated from the nitrogen adsorption isotherm by the BJH method of 0.8 $cm^3/g$ or more.

These two constituent features represent the characteristic pore structure of the porous carbon, whereby the porous carbon of the present invention can exhibit desired adsorption characteristics.

<Relationship between Mass Transfer Coefficient and Relative Pressure, and Value of Mass Transfer Coefficient>

The mass transfer coefficient of porous carbon is an index representing the speed of movement when an adsorbate moves in the porous carbon. The larger the change in mass transfer coefficient with respect to the change in relative pressure, the more smoothly the adsorbate moves from pores where large molecules or viruses spread to smaller pores where large molecules or viruses are adsorbed, and the more smoothly the adsorbate moves from pores where large molecules or viruses are adsorbed to larger pores where large molecules or viruses spread. In addition, the larger the mass transfer coefficient, the faster the moving speed of the adsorbate in the pores of the porous carbon. Therefore, the adsorption characteristics of porous carbon can be evaluated by examining the change in mass transfer coefficient with the change in relative pressure and the value of the mass transfer coefficient.

The relationship between the relative pressure and the mass transfer coefficient and the value of the mass transfer coefficient can be determined by adsorbing nitrogen gas to porous carbon at -196°C to prepare an adsorption isotherm, and analyzing the adsorption isotherm. Specifically, for example, as described in Examples described later, an adsorption isotherm of nitrogen of porous carbon is prepared, and a change in pressure of nitrogen until reaching an adsorption equilibrium at each prescribed relative pressure is converted into a mass transfer coefficient using the LDF approximation. Next, by preparing a graph with the relative pressure on the x-axis and the mass transfer coefficient on the y-axis, the relationship between the relative pressure and the mass transfer coefficient can be expressed.

The present inventors have found that, in this graph, when the slope of an approximate straight line drawn in a relative pressure range of $1.0 \times 10^{-4}$ or more to $1.0 \times 10^{-3}$ or less [in the present description, this slope may be referred to as (a)] is 4 or more, the porous carbon can exhibit desired adsorption characteristics (for example, a high adsorption amount and a high adsorption rate, in particular, a high adsorption rate).

Here, the reason the range of the relative pressure is set to $1.0 \times 10^{-4}$ or more to $1.0 \times 10^{-3}$ or less will be described. In the present description, molecules (for example, proteins such as albumin and antibodies) or viruses having a relatively large diameter (for example, 2 to 200 nm) are assumed as the adsorbate. When the relative pressure is excessively low, namely, when the relative pressure is less than $1.0 \times 10^{-4}$, it is considered that the adsorption behavior in pores smaller than pores effectively acting as adsorption sites of such an adsorbate is reflected in the mass transfer coefficient. In contrast, when the relative pressure is excessively high, that is, when the relative pressure is larger than $1.0 \times 10^{-3}$, it is considered that the adsorption behavior in pores larger than pores effectively acting as adsorption sites of such an adsorbate is reflected in the mass transfer coefficient. By setting the relative pressure to $1.0 \times 10^{-4}$ or more and $1.0 \times 10^{-3}$ or less, it is considered that a region where the adsorption behavior of the adsorbate assumed in the present description is reflected in the mass transfer coefficient can be evaluated, and the slope of the approximate straight line in this range can be used as one of the indices of the adsorption performance of the adsorbate.

A more specific method for determining the (a) will be described using a graph showing a relationship between the relative pressure and the mass transfer coefficient of the porous carbon of Example 2 described later shown in Fig. 1.

First, an approximate straight line is drawn in a relative pressure range of $1.0 \times 10^{-4}$ or more to $1.0 \times 10^{-3}$ or less (in Fig. 1, this range is shown by a broken line and an arrow) in a graph showing the relationship between the relative pressure and the mass transfer coefficient, prepared as described in Examples described later. Next, the slope (a) of the approximate straight line is determined.

When the (a) is less than 4, it is difficult for the porous carbon to exhibit desired adsorption characteristics. The (a) is 4 or more, preferably 5.5 or more, more preferably 6 or more (for example, 6.5 or more), still more preferably 7 or more (for example, 7.5 or more), and particularly preferably 8 or more (for example, 8.15 or more). When the (a) is the above-mentioned equal to or more than lower limit value, the porous carbon tends to have a pore structure suitable for adsorption of an adsorbate, and therefore the porous carbon easily exhibits desired adsorption characteristics. Further, the (a) is usually 10 or less.

The value of the mass transfer coefficient at a relative pressure of $1.0 \times 10^{-3}$ in the approximate straight line in the above range [in the present description, this value may be referred to as (b)] is preferably $3.0 \times 10^{-3}$ or more, more preferably $5.0 \times 10^{-3}$ or more, still more preferably $6.0 \times 10^{-3}$ or more (for example, $7.0 \times 10^{-3}$ or more), and particularly preferably $8.0 \times 10^{-3}$ or more. When the (b) is equal to or more than the above-mentioned lower limit value, the porous carbon tends to have a pore structure suitable for adsorption of an adsorbate, and therefore the porous carbon easily exhibits desired adsorption characteristics. In addition, the (b) is usually $1.0 \times 10^{-2}$ or less. With reference to the graph shown in Fig. 1, it is described that the (b) is a value of a mass transfer coefficient at a relative pressure of $1.0 \times 10^{-3}$ (the right broken line or the right end of the arrow).

The above-described "pore structure suitable for adsorption of an adsorbate" is considered to be a pore structure in which there are many pores that effectively act as adsorption sites of the adsorbate, openings of such pores have dimensions suitable for entering and exiting the adsorbate, a proportion of pores communicating from the opening at one end to the opening at the other end (namely, pores having an opening at one end and not closed at the other end) is high, a structure that hinders movement of the adsorbate is small in the communication portion (for example, a bottleneck or the like), and a path through which the adsorbate moves (for adsorption or desorption) in the porous carbon is relatively short. Therefore, the pore structure of the porous carbon of the present invention is distinguished from a pore structure which has a relatively long path through which an adsorbate moves (for absorption or desorption) in the porous carbon and which has many structures hindering the movement of an adsorbate (for example, a bottleneck or the like) and corresponding to regions among template particles having been present or gaps among template particles having been continuously present, such as a "three-dimensional network structure" formed of gaps and a carbon skeleton surrounding the gaps, the gaps being generated by mixing a carbon source and template particles (pore source), carbonizing the mixture, and removing the aggregated and connected template particles (namely, the gaps correspond to continuous pores generated by removing the template particles having been present).

**In** one preferred embodiment of the present invention, it is considered that all the pores communicate from the opening at one end to the opening at the other end.

**In** addition, the (a) is considered to correspond to the length of the path through which an adsorbate moves (for adsorption or desorption) in the porous carbon. And it is considered that the larger the (a) is, the shorter the length of the path is. The (b) is considered to correspond to the amount of the structure that hinders the movement of the adsorbate in the communication portion. And it is considered that the larger the (b) is, the smaller the amount of the structure that hinders the movement of the adsorbate is.

The porous carbon having the (a) of equal to or more than the lower limit value described above can be produced, for example, by subjecting a mixture in which a carbon source and a pore source are mixed in a highly compatible state to phase separation by heat treatment, then carbonizing the mixture to fix the phase separation structure, and removing the pore source from the resulting carbonized product. For example, in the method for producing porous carbon described later, the (a) can be adjusted to be equal to or more than the lower limit value by appropriately adjusting the temperature and time for heat-treating a mixture of a carbon source and a calcium compound to be a pore source, or by appropriately adjusting the temperature and time for heat-treating the mixture while changing the type of the carbon source. In addition, the (b) also can be adjusted to be equal to or more than the lower limit value by appropriately adjusting the same conditions.

<Pore volume of pores having pore diameter of 2 nm or more and 200 nm or less>

In the porous carbon of the present invention, the pore volume of pores having a pore diameter of 2 nm or more and 200 nm or less (hereinafter, it may be referred to as a "pore volume of pores of 2 nm or more and 200 nm or less") calculated from a nitrogen adsorption isotherm by the BJH method is 0.8 $cm^3/g$ or more. The pores of 2 nm or more and 200 nm or less are considered to be greatly involved in adsorption and desorption of an adsorbate. Therefore, when the pore volume of pores of 2 nm or more and 200 nm or less is less than 0.8 $cm^3/g$, it is difficult for the porous carbon to have desired adsorption characteristics.

The pore volume of pores of 2 nm or more and 200 nm or less is preferably 0.90 $cm^3/g$ or more, more preferably 1.00 $cm^3/g$ or more, still more preferably 1.30 $cm^3/g$ or more, further preferably 1.60 $cm^3/g$ or more, particularly preferably 1.90 $cm^3/g$ or more, more particularly preferably 2.00 $cm^3/g$ or more, and extremely preferably 2.20 $cm^3/g$ or more. When the pore volume of pores of 2 nm or more and 200 nm or less is equal to or more than the lower limit value, the porous carbon tends to have desired adsorption characteristics. The upper limit value of the pore volume of pores of 2 nm or more and 200 nm or less is not particularly limited, but is usually 4.00 $cm^3/g$ or less, and preferably 3.90 $cm^3/g$ or less.

The pore volume of pores of 2 nm or more and 200 nm or less can be adjusted to equal to or more than the lower limit value and equal to or less than the upper limit value by, for example, appropriately adjusting the types and/or the proportions of the carbon source and the calcium compound, or the temperature and/or the time of the heat treatment step (phase separation step and/or carbonization step) in the method for producing porous carbon described later. The pore volume of pores of 2 nm or more and 200 nm or less can be calculated by analyzing a nitrogen adsorption isotherm of the porous carbon by the BJH method, and can be determined, for example, by the method described in Examples described later.

<Mode diameter>

In the porous carbon, the mode diameter of pores calculated from a nitrogen adsorption isotherm by the BJH method (hereinafter, it may be simply referred to as "mode diameter") may be, for example, 200 nm or less, 190 nm or less, or 180 nm or less, and may be, for example, 2 nm or more, 10 nm or more, or 20 nm or more. Herein, the "mode diameter" means a pore diameter having the largest appearance ratio in a logarithmic differential pore volume distribution [dV/d(log D)] obtained by differentiating the cumulative pore volume (V) with the common logarithm of the pore diameter (D). As the mode diameter of the porous carbon is smaller, adsorption characteristics with respect to molecules, viruses, and bacteria having a smaller size tend to be better, and as the mode diameter of the porous carbon is larger, adsorption characteristics with respect to molecules, viruses, and bacteria having a larger size tend to be better. Therefore, by adjusting the mode diameter of the porous carbon according to the sizes of molecules, viruses, and bacteria, the porous carbon tends to have desired adsorption characteristics.

The mode diameter can be adjusted to equal to or more than the lower limit value and equal to or less than the upper limit value by, for example, appropriately adjusting the types and/or the proportions of the carbon source and the calcium compound, or the temperature and/or the time of the heat treatment step (phase separation step and/or carbonization step) in the method for producing porous carbon described later. The mode diameter can be calculated by analyzing a nitrogen adsorption isotherm of porous carbon by the BJH method, and can be determined, for example, by the method described in Examples described later.

<Bulk density>

The bulk density in porous carbon indicates the degree of development of a pore structure. When the pore volumes of pores having a pore diameter of 2 nm or more and 200 nm or less are equivalent, the pore volume having a pore diameter of more than 200 nm is larger as the bulk density is lower. It is considered that pores having a pore diameter of 2 nm or more and 200 nm or less play a role of migration and adsorption function of large molecules or viruses, whereas pores having a pore diameter of more than 200 nm play a role of an entrance or a migration path for large molecules or viruses to smoothly migrate to pores having a pore diameter of 2 nm or more and 200 nm or less. Therefore, it is preferable that in addition to the pore volume of 2 nm or more and 200 nm or less in pore diameter, the pore volume of 200 nm or more in pore diameter is also large, that is, the bulk density is small.

In one preferred embodiment, the bulk density of the porous carbon is preferably less than 0.10 $g/cm^3$, more preferably 0.08 $g/cm^3$ or less, still more preferably 0.06 $g/cm^3$ or less, and particularly preferably 0.03 $g/cm^3$ or less. When the bulk density is less than the upper limit value or equal to or less than the upper limit value, large molecules or viruses can smoothly move into the inside of the pores having a pore diameter of 2 nm or more and 200 nm or less, and as a result, desired adsorption characteristics are easily exhibited. The lower limit value of the bulk density of the porous carbon is not particularly limited, but is usually 0.001 $g/cm^3$ or more, and preferably 0.005 $g/cm^3$ or more. When the bulk density is equal to or more than the lower limit value, scattering is easily inhibited during the use of the porous carbon as an adsorbent, and handleability is easily improved.

The bulk density can be adjusted to be equal to or more than the lower limit value and less than the upper limit value or equal to or less than the upper limit value, for example, by appropriately adjusting the temperature and time when the mixture of the carbon source and the calcium compound is heat-treated or by appropriately adjusting the temperature and time when the mixture is heat-treated while changing the type of the carbon source in the method for producing porous carbon described later.

The bulk density can be measured, for example, by the method described in Examples described later.

<Pore volume of pores having pore diameter of less than 2 nm>

In one preferred embodiment, the pore volume of pores having a pore diameter of less than 2 nm calculated from a nitrogen adsorption isotherm of the porous carbon by the DFT method is preferably 0.35 $cm^3/g$ or less, more preferably 0.32 $cm^3/g$ or less, further preferably 0.30 $cm^3/g$ or less, particularly preferably 0.28 $cm^3/g$ or less, more further preferably 0.25 $cm^3/g$ or less, more particularly preferably 0.23 $cm^3/g$ or less, still more particularly preferably 0.21 $cm^3/g$ or less, and extremely preferably 0.20 $cm^3/g$ or less. A pore having a pore diameter of less than 2 nm is a pore that cannot adsorb large molecules having a diameter of 2 to 200 nm or viruses. When the volume of pores having a pore diameter of less than 2 nm is equal to or less than the upper limit value, the pore volume of pores having a pore diameter of 2 to 200 nm tends to be high, and therefore desired adsorption characteristics are easily exhibited. The lower limit value of the pore volume of pores having a pore diameter of less than 2 nm is not particularly limited, but is preferably 0.01 $cm^3/g$ or more. The pore volume of pores having a pore diameter of less than 2 nm can be adjusted to equal to or more than the lower limit value and equal to or less than the upper limit value by, for example, appropriately adjusting the types and/or the proportions of the carbon source and the calcium compound, or the temperature and/or the time of the heat treatment step (phase separation step and/or carbonization step) in the method for producing porous carbon described later. The pore volume of pores having a pore diameter of less than 2 nm can be determined by analyzing an adsorption isotherm obtained by nitrogen adsorption measurement of porous carbon by the QS-DFT method, and calculating the volume of pores having a pore diameter of less than 2 nm.

<Specific surface area calculated by BET method>

In one preferred embodiment, the specific surface area calculated from a nitrogen adsorption isotherm of the porous carbon by the BET method is preferably 300 $m^2/g$ or more, more preferably 400 $m^2/g$ or more, still more preferably 450 $m^2/g$ or more, and particularly preferably 500 $m^2/g$ or more, and preferably 1200 $m^2/g$ or less, more preferably 1100 $m^2/g$ or less, and still more preferably 1000 $m^2/g$ or less. When the specific surface area is equal to or more than the lower limit value and equal to or less than the upper limit value, the porous carbon tends to have many pores having a pore diameter of 2 to 200 nm suitable for adsorption of large molecules or viruses, and therefore, desired adsorption characteristics are easily exhibited. The specific surface area can be adjusted to equal to or more than the lower limit value and equal to or less than the upper limit value by, for example, appropriately adjusting the types and/or the proportions of the carbon source and the calcium compound, the temperature and/or the time of the heat treatment step (phase separation step and/or carbonization step) in the method for producing porous carbon described later. The specific surface area can be calculated from an approximate straight line in a relative pressure range of 0.05 or more to 0.1 or less in the approximate straight line of a curve obtained by measuring an adsorption isotherm of the porous carbon, and analyzing the adsorption isotherm by a multipoint method using the BET equation to obtain the curve.

<Content of calcium>

In one preferred embodiment, the content of calcium in the porous carbon is preferably 20 ppm or more, more preferably 50 ppm or more, still more preferably 100 ppm or more, and preferably 2000 ppm or less, more preferably 1500 ppm or less, still more preferably 1000 ppm or less. When the content of calcium is equal to or more than the lower limit value and equal to or less than the upper limit value, an excessive increase in the mass of the porous carbon is easily inhibited, and the porous carbon tends to be superior in productivity. The content of calcium can be adjusted to be equal to or more than the lower limit value and equal to or less than the upper limit value, for example, by appropriately adjusting the conditions of the step of removing the calcium compound (for example, the type and/or the concentration of the acid used for the acid washing, the time and/or the temperature of the acid washing, and the like) in the method for producing porous carbon described later.

<Content of sulfur and content of silicon>

In one preferred embodiment, the content of sulfur in the porous carbon is preferably 1000 ppm or less, more preferably 900 ppm or less, and still more preferably 800 ppm or less. In one preferred embodiment, the content of silicon in the porous carbon is preferably 1000 ppm or less, more preferably 900 ppm or less, and still more preferably 800 ppm or less. When the contents of sulfur and silicon are equal to or less than the upper limit values, an excessive increase in the mass of the porous carbon is easily inhibited, and the porous carbon tends to be superior in productivity. The lower limit value of each of the contents of sulfur and silicon are not particularly limited, and may be 0 ppm. The contents of sulfur and silicon can be adjusted to be equal to or less than the upper limit values, for example, by appropriately select the type of the carbon source and/or by appropriately adjusting the conditions of the step of removing the calcium compound (for example, the type and/or the concentration of the acid used for the acid washing, the time and/or the temperature of the acid washing, and the like) in the method for producing porous carbon described later.

The contents of calcium, sulfur and silicon can be measured by X-ray fluorescence analysis.

<Average primary particle diameter>

In one preferred embodiment, the porous carbon is preferably particulate.

In this embodiment, the average primary particle diameter of the porous carbon is preferably 1 μm or more, more preferably 2 μm or more, and particularly preferably 5 μm or more, and preferably 80 μm or less, and more preferably 60 μm or less. When the average primary particle diameter is equal to or more than the lower limit value and equal to or less than the upper limit value, the porous carbon tends to be superior in adsorption performance.

The average primary particle diameter can be adjusted to be equal to or more than the lower limit value and equal to or less than the upper limit value, for example, by appropriately selecting the type of the carbon source and/or appropriately adjusting the conditions of the pulverizing step, and the like in the method for producing porous carbon described later. In the present description, the average primary particle diameter is a particle diameter at which a cumulative volume measured by a laser diffraction/scattering method is 50%. When measurement by the laser diffraction/scattering method is impossible, the average primary particle diameter may refer to an average particle diameter determined by measuring the particle diameter of primary particles appearing in an electron microscope image and calculating an average value.

[Method for producing porous carbon]

The porous carbon of the present invention can be produced, for example, by a method comprising:

(1) a step of obtaining a mixture comprising a carbon source and a calcium compound;
(2) a step of heat-treating the mixture in an inert gas atmosphere to phase-separate the carbon source and the calcium compound;
(3) a step of heat-treating the phase-separated mixture in an inert gas atmosphere to obtain a carbonized product; and
(4) a step of removing the calcium compound from the carbonized product.

<Step (1)>

The carbon source is not particularly limited. From the viewpoint of enhancing compatibility with a calcium compound serving as a pore source, the carbon source is preferably a saccharide. Examples of the saccharide include monosaccharides such as glucose, galactose, mannose, fructose, ribose, and glucosamine; disaccharides such as sucrose, trehalose, maltose, cellobiose, maltitol, lactobionic acid, and lactosamine; and polysaccharides such as starch, cellulose, glycogen, pectin, curdlan, and guar gum. These saccharides may be used singly or two or more saccharides may be used in combination. Among these saccharides, glucose and starch are preferable from the viewpoint of easy production of porous carbon that exhibits desired adsorption characteristics and easy availability in large amounts.

The starch is not particularly limited, and for example, starch derived from corn, cassava, potato, sweet potato, tapioca, bean, wheat, rice, or the like can be used. The amylose content of starch is preferably 50% by mass or less, and more preferably 30% by mass or less with respect to the mass of the starch. The lower the amylose content of starch, the lower the gelatinization temperature tends to be. Therefore, it is preferable that the amylose content of starch is equal to or less than the upper limit value because gelatinization easily occurs at a low temperature, and compatibility with a calcium compound serving as a pore source easily increases. The amylose content can be determined, for example, by the iodine colorimetric method. The starch may also be a modified starch that has been modified. Examples of the modified starch include, for example, etherified starches, esterified starches, cationized starches, and cross-linked starches. Such starches may be used singly or two or more starches may be used in combination. When two or more starches are used in combination, the amylose content is the average amylose content of the starches combined.

The pore source is not particularly limited. From the viewpoint of easily enhancing compatibility with the carbon source, the pore source is preferably a calcium compound. The calcium compound is not particularly limited, and for example, calcium chloride, calcium hydroxide, calcium oxide, calcium carbonate, calcium acetate, calcium fluoride, calcium bromide, calcium iodide, calcium carbide, calcium hydrogencarbonate, calcium nitrate, calcium sulfate, calcium silicate, calcium phosphate, calcium pyrophosphate, calcium gluconate, and calcium lactate, and the like can be used. Among these calcium compounds, a calcium compound having a melting point of 300°C or lower (when the mixture contains water and/or a polyhydric alcohol and/or a carboxylic acid described below, the melting point of the eutectic compound of the calcium compound, the carbon source, and water and/or the polyhydric alcohol and/or the carboxylic acid is 300°C or lower) is preferable from the viewpoint of easily producing porous carbon that exhibits desired adsorption characteristics, and at least one selected from the group consisting of calcium chloride hydrate, calcium hydroxide, calcium oxide, calcium carbonate, and calcium acetate is more preferable. Calcium chloride hydrates include dihydrate, tetrahydrate, and hexahydrate, and any hydrate may be used, but the dihydrate is preferable because it has good reactivity with saccharides.

The mixture comprising the carbon source and the calcium compound may further contain at least one selected from the group consisting of water, a polyhydric alcohol, and a carboxylic acid. When water and/or the polyhydric alcohol and/or the carboxylic acid are contained in the mixture, it is considered that the carbon source and the calcium compound are compatibilized with each other via water and/or the polyhydric alcohol and/or the carboxylic acid to form a eutectic compound. Therefore, the melting point of the calcium compound having a melting point of 300°C or higher alone can be reduced to 300°C or lower as the melting point of the eutectic compound. Therefore, the phrase "the melting point of the calcium compound is 300°C or lower" as used herein also includes "the melting point of a eutectic compound of water and/or a polyhydric alcohol and/or a carboxylic acid, a carbon source, and a calcium compound is 300°C or lower". Water is preferable from the viewpoint of easy availability. Examples of the polyhydric alcohol that can be used include glycerin, ethylene glycol, propylene glycol, polyethylene glycol, and polypropylene glycol. Among these polyhydric alcohols, glycerin and ethylene glycol are preferable from the viewpoint of easily dissolving the calcium compound and being easily available in a large amount. Examples of the carboxylic acid that can be used include formic acid, acetic acid, propionic acid, butyric acid, valeric acid, caproic acid, lactic acid, malic acid, citric acid, benzoic acid, phthalic acid, salicylic acid, oxalic acid, malonic acid, succinic acid, glutaric acid, adipic acid, fumaric acid, and maleic acid. Among these carboxylic acids, formic acid and acetic acid are preferable from the viewpoint of easily dissolving the calcium compound and being easily available in a large amount. When two or more compounds selected from among water, one or more polyhydric alcohols, and one or more carboxylic acids are mixed and used, the use ratio of the two or more compounds of water, the polyhydric alcohols, and the carboxylic acid may be appropriately changed according to desired properties of the porous carbon.

The method for mixing the carbon source and the calcium compound, and optionally water, the polyhydric alcohol and/or the carboxylic acid is not particularly limited, and the mixing may be performed by any mixing method.

The amount of the calcium compound to be mixed with the carbon source is preferably 80 parts by mass or more, more preferably 130 parts by mass or more, and still more preferably 180 parts by mass or more and is preferably 500 parts by mass or less, more preferably 400 parts by mass or less, and still more preferably 300 parts by mass or less, per 100 parts by mass of the carbon source. When the amount of the calcium compound is equal to or more than the lower limit value and equal to or less than the upper limit value, the relationship between the mass transfer coefficient and the relative pressure of the resulting porous carbon, as well as the pore volume tend to be appropriate.

When the mixture comprising the carbon source and the calcium compound further contains water and/or a polyhydric alcohol and/or a carboxylic acid, the amount of the water and/or the polyhydric alcohol and/or the carboxylic acid (when two or more selected from among water, one or more polyhydric alcohols, and one or more carboxylic acids are used, the amount corresponds to total amount thereof) is preferably 50 parts by mass or more, more preferably 100 parts by mass or more, still more preferably 150 parts by mass or more, and preferably 500 parts by mass or less, more preferably 400 parts by mass or less, and still more preferably 300 parts by mass or less per 100 parts by mass of the carbon source. However, when the mixture comprising the carbon source and the calcium compound does not contain the polyhydric alcohol and the carboxylic acid but contains water, the amount of the water is preferably 10 parts by mass or more, more preferably 20 parts by mass or more, and still more preferably 50 parts by mass or more and preferably 500 parts by mass or less, more preferably 400 parts by mass or less, and still more preferably 300 parts by mass or less per 100 parts by mass of the carbon source. When the amount of water and/or the polyhydric alcohol and/or the carboxylic acid is equal to or more than the lower limit value and equal to or less than the upper limit value, a eutectic compound is likely to be generated, so that the relationship between the mass transfer coefficient and the relative pressure of the resulting porous carbon, as well as the pore volume tend to be appropriate.

<Step (2)>

In the step (2), the mixture obtained in the step (1) is heat-treated in an inert gas atmosphere to phase-separate the carbon source and the calcium compound.

Examples of the inert gas include nitrogen, argon, and a mixture thereof. The concentration of an oxidizing gas in the gas to be used is preferably as low as possible. The concentration of the oxidizing gas, particularly oxygen, is usually 1% by volume or less, and more preferably 0.1% by volume or less with respect to the volume of the gas to be used. When the concentration of the oxidizing gas is equal to or less than the upper limit value, oxidation of the mixture is inhibited, and it is easy to obtain a structure having desired characteristics. In addition, the oxidative decomposition of the generated structure can be inhibited.

The feed amount (flow amount) of the inert gas is usually 200 mL/min or more, preferably 500 mL/min or more, and more preferably 1000 mL/min or more and usually 7000 mL/min or less, preferably 6000 mL/min or less, and more preferably 5000 mL/min or less, per 1 g of the mixture.

The heat treatment temperature is preferably 150°C or higher, more preferably 200°C or higher, and still more preferably 240°C or higher (for example, 250°C or higher, or higher than 300°C), and preferably 500°C or lower (for example, lower than 500°C), more preferably 470°C or lower (for example, 450°C or lower), and still more preferably 420°C or lower (for example, 400°C or lower, or lower than 400°C). The heat treatment temperature is preferably 150°C or higher and 500°C or lower (for example, higher than 300°C and 500°C or lower), more preferably 150°C or higher and 470°C or lower (for example, higher than 300°C and 470°C or lower), still more preferably 200°C or higher and 450°C or lower (for example, higher than 300°C and 450°C or lower), and particularly preferably 240°C or higher and 420°C or lower (for example, higher than 300°C and 420°C or lower).

The present inventors have found that a characteristic pore structure of porous carbon is obtained by subjecting the mixture obtained in step (1) to a heat treatment in an inert gas atmosphere, preferably at a temperature equal to or higher than the lower limit value and equal to or lower than the upper limit value or at a temperature within the above range. The reason is not clear, but the following non-limiting mechanism of action is conceivable.

By the heat treatment, the carbon source and the calcium compound compatible with the carbon source due to hydrogen bonding are phase-separated from each other in the mixture starting from desorption of hydrated water from the mixture or the dehydration reaction of the carbon source. Furthermore, it is considered that as the dehydration reaction of the carbon source proceeds, the carbon source is hardened, and the structure in a state where the carbon source and the calcium compound are phase-separated is fixed. At this time, at least a part of the phase-separated calcium compound (preferably 50% by mass or more, more preferably almost all, or all of the phase-separated calcium compound) is continuously, three-dimensionally connected. In a subsequent carbonization step, the carbon source becomes insoluble in hot water or hot acid as a result of aromatization (carbonization), and in a subsequent calcium compound removal step, the calcium compound is removed from the carbonized product (preferably by washing with an acid). Since the trace resulting from the removal of the calcium compound becomes pores, it is considered that a characteristic pore structure of porous carbon is obtained via the phase separation of the calcium compound by the heat treatment.

The temperature-raising rate in the heat treatment step is preferably 2°C/min or more, more preferably 5°C/min or more, and still more preferably 10°C/min or more. When the temperature-raising rate is equal to or more than the lower limit value, it is easy to obtain a desired pore volume and/or a desired mass transfer coefficient. The upper limit value of the temperature-raising rate is not particularly limited, but is preferably 200°C/min or less from the viewpoint of easily realizing uniform heat treatment.

The heat treatment time is appropriately chosen according to the heat treatment temperature, the feed amount of the inert gas, and the like. For example, the heat treatment time is 0.1 hours or more, preferably 0.2 hours or more, more preferably 0.3 hours or more, and still more preferably 0.5 hours or more, and preferably 24 hours or less, more preferably 12 hours or less, and still more preferably 8 hours or less. When the heat treatment time is equal to or more than the lower limit value, phase separation tends to sufficiently proceed. It is preferable that the heat treatment time is equal to or less than the upper limit value because it is an appropriate time from the viewpoint of economic efficiency.

As apparatuses used for the heat treatment, various furnaces such as a rotary kiln, a fluidized bed furnace, a fixed bed furnace, a moving bed furnace, and a moving floor furnace, and various dryers such as a spray dryer, a mobile dryer, a stirring type dryer, a roll type dryer, and a thin film evaporator can be used. In addition, either a continuous furnace or a continuous dryer that continuously performs the feeding of the substance to be subjected to the heat treatment and the taking out of the substance after the heat treatment, or a batch furnace or a batch dryer that discontinuously performs the feeding of the substance to be subjected to the heat treatment and the taking out of the substance after the heat treatment may be used. The heating means may be any means capable of heating to a prescribed temperature, and may be, for example, electric heating, gas combustion type heating, microwave heating, high-frequency induction heating, and energized heating. These heating means may be used singly or in combination.

<Step (3)>

In the step (3), the mixture phase-separated in the step (2) is subjected to a heat treatment in an inert gas atmosphere to be carbonized.

The heat treatment temperature is preferably 500°C or higher, more preferably higher than 550°C, still more preferably 600°C or higher, and particularly preferably 650°C or higher, and is preferably 1300°C or lower, more preferably 1200°C or lower, and still more preferably 1000°C or lower. When the heat treatment temperature is equal to or higher than the lower limit value or higher than the lower limit value, and is equal to or lower than the upper limit value, the resulting porous carbon tends to have an appropriate pore volume of pores of 2 nm or more and 200 nm or less, porous carbon having desired adsorption characteristics is likely to be obtained, and removal of the calcium compound tends to be facilitated in the subsequent step of removing the calcium compound from the carbonized product.

The heat treatment of the phase-separated mixture may be performed in multiple stages. For example, the phase-separated mixture may be heat-treated at 500 to 900°C, and then heat-treated at 900 to 1300°C. From the viewpoint of easily obtaining porous carbon having desired adsorption characteristics, it is preferable not to perform the heat treatment in multiple stages. However, performing the heat treatment in multiple stages is not excluded.

The temperature-raising rate in the heat treatment step is preferably 2°C/min or more, more preferably 5°C/min or more, and still more preferably 10°C/min or more. When the temperature-raising rate is equal to or more than the lower limit value, it is easy to obtain a desired pore volume. The upper limit value of the temperature-raising rate is not particularly limited, but is preferably 200°C/min or less from the viewpoint of easily realizing uniform heat treatment.

The heat treatment time is appropriately chosen according to the heat treatment temperature, the feed amount of the inert gas, and the like. For example, the heat treatment time is 0.5 hours or more, preferably 0.7 hours or more, and more preferably 0.8 hours or more, and preferably 24 hours or less, more preferably 12 hours or less, and still more preferably 8 hours or less. When the heat treatment time is equal to or more than the lower limit value, carbonization tends to sufficiently proceed. It is preferable that the heat treatment time is equal to or less than the upper limit value because it is an appropriate time from the viewpoint of economic efficiency. The heat treatment time in the case where the heat treatment is performed in multiple stages means the total heat treatment time.

As the inert gas, the feed amount thereof, and the furnace used for the heat treatment, those equivalent to those in the step (2) may be adopted.

<Step (4)>

In the step (4), the calcium compound is removed from the resulting carbonized product. Thereby, porous carbon can be obtained.

The removal of the calcium compound is preferably performed by acid washing. Examples of the acid used for the acid washing include hydrochloric acid, sulfuric acid, and nitric acid. Hydrochloric acid is preferable from the viewpoint of easily dissolving metal compounds in the carbonized product, hardly remaining impurities such as sulfur, and easily inhibiting oxidation of the carbonized product. The concentration of the acid during the acid washing may be appropriately changed depending on the type of the acid to be used. For example, when hydrochloric acid is used, the concentration of hydrochloric acid is preferably 0.01 to 1.0 mol/L, and more preferably 0.05 to 0.5 mol/L. It is preferable that the concentration of hydrochloric acid is within the above range because metal compounds are easily removed, and hydrochloric acid hardly remains in the carbonized product.

The pH of the acid at the time of the acid washing may be appropriately changed depending on the type, concentration, temperature, and the like of the acid to be used. The pH of the acid is preferably 3 or less, and more preferably 2.5 or less. When the pH of the acid is equal to or less than the upper limit value, it is easy to remove metal compounds efficiently.

The acid washing may be performed, for example, by immersing the resulting carbonized product in the acid. When the acid washing is performed by immersion in the acid, the mass ratio of the acid to the carbonized product may be appropriately adjusted according to the type, concentration, temperature, and the like of the acid to be used. The mass of the carbonized product to be immersed with respect to the mass of the acid is preferably 2% by mass or more, more preferably 5% by mass or more, and preferably 50% by mass or less, more preferably 30% by mass or less. When the mass ratio of the carbonized product to be immersed to the mass of the acid is equal to or more than the lower limit value and equal to or less than the upper limit value, a sufficient cleaning effect is easily obtained.

The method for immersing the carbonized product in the acid is not particularly limited. It may be a method in which immersion is performed while an acid is continuously added, retained for a prescribed time, and then drained, or a method in which the carbonized product is immersed in the acid, retained for a prescribed time, and the liquid is removed, and then a fresh acid is added, and such immersion and removal are repeated. In addition, either a method in which the entire acid is renewed or a method in which a part of the acid is renewed may be used. In addition, the acid may be stirred during immersion.

The atmosphere in which the acid washing is performed is not particularly limited, and may be appropriately selected according to the method used for washing. The acid washing is usually performed in an air atmosphere.

The time for immersing the carbonized product in the acid can be appropriately adjusted according to the acid to be used, the treatment temperature, and the like. The immersion time is preferably 5 minutes or more from the viewpoint of easily removing metal compounds sufficiently, and is preferably 60 minutes or less, more preferably 40 minutes or less, and still more preferably 35 minutes or less from the viewpoint of productivity.

After the acid washing of the carbonized product, the acid in the porous carbon is preferably removed by water washing. The acid washing and the water washing may be repeatedly performed until the calcium compound in the porous carbon can be removed to a desired degree. In addition, the temperature of the solution at the time of acid washing and water washing is preferably high from the viewpoint of the efficiency of removing the calcium compound and the residual acid, and is usually 60°C or higher.

As one embodiment of the present invention, when the heat treatment of the phase-separated mixture is performed in multiple stages, acid washing may be performed between the multiple-stage heat treatments. For example, the mixture phase-separated in the step (2) may be heat-treated (for example, at 500 to 900°C), then acid-washed, and then heat-treated (for example, at 900 to 1300°C).

The porous carbon after the acid washing and the water washing may be subjected to a drying treatment using a known dryer such as a hot air dryer or a vacuum dryer. The drying is preferably performed at a temperature of 50 to 150°C. It is preferable that the drying temperature is within this range because oxidation of the porous carbon hardly occurs, and drying proceeds appropriately.

The dried porous carbon may be pulverized. By the pulverization, the shape, particle diameter, and the like of the finally obtained porous carbon can be controlled to a desired shape, particle diameter, and the like. The pulverization method is not particularly limited. For example, known pulverizers such as a ball mill, a centrifugal roll mill, a ring roll mill, a centrifugal ball mill, a jet mill, a cone crusher, a double roll crusher, a disk crusher, and a rotary crusher may be used singly or in combination.

The method for producing porous carbon may further comprise a classification step after the pulverization step. For example, porous carbon having a narrow particle size distribution width can be obtained by removing particles extremely smaller or larger than a desired particle diameter. The classification method is not particularly limited. Examples of the classification method include classification using a sieve, wet classification, and dry classification. Examples of a wet classifier include classifiers using such principles as gravity classification, inertial classification, hydraulic classification, and centrifugal classification. Examples of a dry classifier include classifiers using such principles as sedimentation classification, mechanical classification, and centrifugal classification. From the viewpoint of economic efficiency, it is preferable to use a dry classifier.

To prevent oxidation of the surface during pulverization, the pulverization step and the classification step are preferably performed in an inert gas atmosphere.

The pulverization and the classification may be performed using a single apparatus. For example, the pulverization and the classification can be performed using a jet mill equipped with a dry classification function. Furthermore, an apparatus in which a pulverizer and a classifier are independent from each other may be used. In this case, the pulverization and the classification may be continuously performed, but the pulverization and the classification may also be discontinuously performed.

The porous carbon of the present invention has a characteristic pore structure. Therefore, the present invention is also directed to porous carbon as an adsorbent.

Owing to having this characteristic pore structure, the porous carbon can exhibit superior adsorption characteristics to molecules having a relatively large diameter (for example, 2 to 200 nm) or viruses. Therefore, the present invention is also directed to porous carbon as an adsorbent for adsorbing proteins or porous carbon as an adsorbent for adsorbing viruses.

In one preferred embodiment, when albumin is adsorbed for 5 minutes, the porous carbon preferably has an adsorption rate of 50% or more, more preferably 60% or more, and particularly preferably 70% or more.

In another preferred embodiment, when albumin is adsorbed for 60 minutes, the porous carbon preferably has an adsorption rate of 60% or more, more preferably 70% or more, and particularly preferably 90% or more.

In one preferred embodiment, the ratio (%) of the adsorption rate after 5 minutes of adsorption of albumin to the adsorption rate after 60 minutes of adsorption of albumin [(adsorption rate after 5 minutes of adsorption/adsorption rate after 60 minutes of adsorption) × 100] is preferably 60% or more, more preferably 70% or more, and particularly preferably 80% or more.

In one preferred embodiment, when an antibody (for example, human plasma-derived γ-globulin or bovine plasma-derived γ-globulin) is adsorbed for 5 minutes, the porous carbon preferably has an adsorption rate of 30% or more, more preferably 50% or more, and particularly preferably 60% or more.

In another preferred embodiment, when the antibody is adsorbed for 60 minutes, the porous carbon preferably has an adsorption rate of 50% or more, more preferably 60% or more, and particularly preferably 70% or more.

In one preferred embodiment, the ratio (%) of the adsorption rate after 5 minutes of adsorption of the antibody to the adsorption rate after 60 minutes of adsorption of the antibody [(adsorption rate after 5 minutes of adsorption/adsorption rate after 60 minutes of adsorption) × 100] is preferably 60% or more, more preferably 70% or more, and particularly preferably 80% or more.

In one preferred embodiment, when a virus (for example, feline calicivirus) is adsorbed, the porous carbon preferably has an antiviral property of $10^{3.0}TCID_{50}$/mL or less, more preferably $10^{2.5}TCID_{50}$/mL or less, and particularly preferably $10^{1.5}TCID_{50}$/mL or less.

The adsorption rate of albumin or an antibody of the porous carbon and the antiviral property can be measured by the methods described in Examples described later.

EXAMPLES

Hereinafter, the present invention is described specifically by way of Examples, but these do not limit the scope of the present invention.

[Analysis method]

<Mass transfer coefficient determined by nitrogen adsorption method>

Porous carbon as a measurement sample was filled in a sample tube. The sample tube was placed in "Autosorb-iQ-MP" manufactured by Quantachrome Instruments, Inc., and once depressurized in a state of being cooled to -196°C, and then nitrogen (purity: 99.999%) was adsorbed to the measurement sample at a prescribed relative pressure. The amount of nitrogen adsorbed to the sample when the equilibrium pressure was reached at each prescribed relative pressure was measured, and an adsorption isotherm was prepared.

A mass transfer coefficient was determined by analyzing the data of the prepared nitrogen adsorption isotherm. Specifically, the change in pressure of nitrogen until reaching the adsorption equilibrium at each prescribed relative pressure was converted into a mass transfer coefficient using the LDF approximation. At this time, the conversion into a mass transfer coefficient was conducted such that the number of plots in the relative pressure range of $1.0 \times 10^{-4}$ or more to $1.0 \times 10^{-3}$ or less was at least five.

A graph was prepared with the relative pressure ($P/P_0$) on the x-axis and the mass transfer coefficient on the y-axis. An approximate straight line was drawn in the relative pressure range of $1.0 \times 10^{-4}$ or more to $1.0 \times 10^{-3}$ or less, and the slope (a) thereof and the value (b) of the mass transfer coefficient at a relative pressure of $1.0 \times 10^{-3}$ were determined.

<Pore volume of pores of 2 nm or more and 200 nm or less and mode diameter determined by nitrogen adsorption method>

The nitrogen adsorption isotherm obtained as described above was analyzed by the BJH method, and the volume of pores having a pore diameter of 2 nm or more and 200 nm or less was calculated.

In addition, the nitrogen adsorption isotherm obtained as described above was analyzed by the BJH method, and a logarithmic differential pore volume distribution [dV/d(log D)] obtained by differentiating the cumulative pore volume (V) with the common logarithm of the pore diameter (D) was thereby determined. The pore diameter having the largest appearance ratio was adopted as the mode diameter of the measurement sample.

<Specific surface area>

The nitrogen adsorption isotherm obtained as described above was analyzed by a multipoint method using the BET equation. From the approximate straight line of the obtained curve in the relative pressure range of 0.05 or more to 0.1 or less, the specific surface area of the measurement sample was calculated.

<Bulk density>

The bulk density of the measurement sample was measured using Powder Tester PT-X manufactured by Hosokawa Micron Corporation. Specifically, a measurement sample was charged into an automatic tap density measurement unit, and the bulk density was calculated from the volume after 3000 taps.

<Average primary particle diameter>

A sample was charged into an aqueous solution containing 5% by mass of a surfactant ("Toriton X100" sold by Wako Pure Chemical Industries, Ltd.), and treated with an ultrasonic cleaner for 10 minutes or more to be dispersed in the aqueous solution. Using this dispersion, the particle size distribution was measured by a particle diameter/particle size distribution analyzer ("Microtrac MT3300 EXII" manufactured by MicrotracBEL Corp). The particle size at which the cumulative volume was 50% was adopted as the average primary particle diameter of the sample porous carbon.

<Adsorption characteristics with respect to albumin and antibody>

A 2 g/L aqueous solution of albumin and a 1 g/L aqueous solution of an antibody (γ-globulin derived from human plasma) were prepared. 25 mL of the prepared aqueous albumin solution and 0.1 g of porous carbon were introduced into two containers, and 25 mL of the prepared aqueous antibody solution and 0.1 g of porous carbon were introduced into other two containers. One container containing the aqueous albumin solution and one container containing the aqueous antibody solution were shaken at 25 ± 2°C for 5 minutes to allow albumin or the antibody to adsorb to the porous carbon, and the other container containing the aqueous albumin solution and the other container containing the aqueous antibody solution were shaken at 25 ± 2°C for 60 minutes to allow albumin or the antibody to adsorb to the porous carbon. After the shaking, the porous carbon was removed from each solution using a membrane filter. Subsequently, the absorbance of each of the filtrates was measured by UV-visible absorbance measurement, and the molar concentration of each of the aqueous solutions was determined. The adsorption rate (%) was calculated from each molar concentration $C_1$ determined and the molar concentration $C_2$ of each of the aqueous solutions before mixing with the porous carbon in accordance with the following formula.

$$\text{Adsorption rate} = [(C_2 - C_1)/C_2] \times 100$$

For each aqueous solution, the ratio (%) of the adsorption rate after 5 minutes of adsorption to the adsorption rate after 60 minutes of adsorption [(adsorption rate after 5 minutes of adsorption/adsorption rate after 60 minutes of adsorption) × 100] was determined.

<Antiviral characteristics>

The feline calicivirus infectivity titer was measured on the basis on the TCID50 method.

Specifically, 10 mg of porous carbon was introduced into a test tube, and then 10 mL of a viral solution prepared in $10^{5.1}$ $TCID_{50}$/mL was added. Shake mixing was performed at 150 rpm for 10 minutes at room temperature, and this was defined as a sensitization time. After the sensitization time had elapsed, the mixture was filtered through a 0.45 μm

membrane filter. Then, the filtrate was serially diluted 10 times with a cell maintenance medium, and each dilution was inoculated upon cultured cells in a 96-well microplate and cultured at 37°C for 5 days in the presence of 5% $CO_2$ gas. The cultured cells were microscopically observed, and the presence or absence of virus proliferation was confirmed by cytopathic effect (CPE) appearing in the cultured cells, and the concentration of virus was calculated.

[Example 1]

One gram of glucose (sold by FUJIFILM Wako Pure Chemical Corporation), 2 g (200 parts by mass per 100 parts by mass of glucose) of calcium chloride dihydrate, and 1 g (100 parts by mass per 100 parts by mass of glucose) of ion-exchanged water were mixed. The resulting mixture was heated to 200°C at a temperature-raising rate of 10°C/min under a nitrogen gas flow of 1250 mL/min per gram of the mixture, and heat-treated (phase-separated) at that temperature for 30 minutes. Subsequently, while a nitrogen gas was circulated in the same gas feed amount, the mixture was heated to 700°C at a temperature-raising rate of 10°C/min and heat-treated (carbonized) at that temperature for 60 minutes, affording a carbonized product. The carbonized product was washed by immersion in 0.1 mol/L hydrochloric acid and stirring at 80°C for 30 minutes, and then removed onto a Buchner funnel. Washing with water was performed until the pH of the filtrate was in the range of 6 to 8. Acid washing and water washing were repeated three times, followed by hot air drying at 80°C.

[Example 2]

Porous carbon was obtained in the same manner as in Example 1 except that the temperature of the phase separation was changed from 200°C to 250°C.

[Example 3]

Porous carbon was obtained in the same manner as in Example 1 except that the temperature of the phase separation was changed from 200°C to 350°C.

[Example 4]

Porous carbon was obtained in the same manner as in Example 3 except that the addition amount of calcium chloride dihydrate was changed from 200 parts by mass per 100 parts by mass of glucose to 300 parts by mass per 100 parts by mass of glucose.

[Example 5]

Porous carbon was obtained in the same manner as in Example 3 except that the temperature-raising rate of the phase separation was changed from 10°C/min to 5°C/min.

[Example 6]

Porous carbon was obtained in the same manner as in Example 3 except that the temperature-raising rate of the phase separation was changed from 10°C/min to 20°C/min.

[Example 7]

Porous carbon was obtained in the same manner as in Example 3 except that starch (derived from corn, amylose content: about 26%, sold by FUJIFILM Wako Pure Chemical Corporation) was used instead of glucose.

[Example 8]

Porous carbon was obtained in the same manner as in Example 7 except that the addition amount of calcium chloride dihydrate was changed from 200 parts by mass per 100 parts by mass of starch to 300 parts by mass per 100 parts by mass of starch.

[Comparative Example 1]

Porous carbon was obtained in the same manner as in Example 1 except that the phase separation step was not performed.

[Comparative Example 2]

Porous carbon was obtained in the same manner as in Example 1 except that the temperature at which a mixture of glucose, calcium chloride dihydrate and ion-exchanged water was heat-treated (phase-separated) was changed from 200°C to 140°C.

[Comparative Example 3]

One gram of polyvinyl alcohol (PVA) and 1 g (100 parts by mass per 100 parts by mass of PVA) of magnesium oxide particles having an average particle diameter of 10 nm were mixed. The resulting mixture was heated to 700°C at a temperature-raising rate of 10°C/min under a nitrogen gas flow of 1250 mL/min per gram of the mixture, and heat-treated (carbonized) at that temperature for 60 minutes, affording a carbonized product. The carbonized product was washed by immersion in 1 mol/L sulfuric acid and stirring at 80°C for 30 minutes, and then removed onto a Buchner funnel. Washing with water was performed until the pH of the filtrate was in the range of 6 to 8. Acid washing and water washing were repeated three times, followed by hot air drying at 80°C.

[Comparative Example 4]

CARBORAFFIN manufactured by Osaka Gas Chemicals Co., Ltd. was used as activated carbon.

The production conditions and the physical properties of the porous carbons obtained in Examples and Comparative Examples are shown in Table 1 and Table 2, respectively. The porous carbons obtained in Examples 1 to 8 and Comparative Examples 1 to 4 were particulate.

[Table 1]

Table 1: Conditions for production of porous carbon

| | | Carbon Source | Metal salt | | Phase separation heating rate [°C/min] | Phase separation temperature [°C] | Carbonization heating rate [°C/min] | Carbonization temperature [°C] |
|---|---|---|---|---|---|---|---|---|
| | | | Type | Addition amount [Parts by mass relative to carbon source] | | | | |
| Example | 1 | Glucose | $CaCl_2 \cdot 2H_2O$ | 200 | 10 | 200 | 10 | 700 |
| | 2 | Glucose | $CaCl_2 \cdot 2H_2O$ | 200 | 10 | 250 | 10 | 700 |
| | 3 | Glucose | $CaCl_2 \cdot 2H_2O$ | 200 | 10 | 350 | 10 | 700 |
| | 4 | Glucose | $CaCl_2 \cdot 2H_2O$ | 300 | 10 | 350 | 10 | 700 |
| | 5 | Glucose | $CaCl_2 \cdot 2H_2O$ | 200 | 5 | 350 | 10 | 700 |
| | 6 | Glucose | $CaCl_2 \cdot 2H_2O$ | 200 | 20 | 350 | 10 | 700 |
| | 7 | Starch | $CaCl_2 \cdot 2H_2O$ | 200 | 10 | 350 | 10 | 700 |
| | 8 | Starch | $CaCl_2 \cdot 2H_2O$ | 300 | 10 | 350 | 10 | 700 |
| Comparative Example | 1 | Glucose | $CaCl_2 \cdot 2H_2O$ | 200 | - | - | 10 | 700 |
| | 2 | Glucose | $CaCl_2 \cdot 2H_2O$ | 200 | 10 | 140 | 10 | 700 |
| | 3 | PVA | Magnesium oxide | 100 | - | - | 10 | 700 |
| | 4 | Activated carbon | - | - | - | - | - | - |

[Table 2]

Table 2: Physical properties of porous carbon

| | | Approximate straight line of mass transfer coefficient (a) | Approximate straight line of mass transfer coefficient (b) | 2 to 200 nm pore volume [$cm^3/g$] | Mode diameter [nm] | Bulk density [$g/cm^3$] | Average primary particle diameter [μm] | Specific surface area [$m^2/g$] | Albumin adsorption rate [%] After 5 minutes | Albumin adsorption rate [%] After 60 minutes | Albumin adsorption rate [%] After 5 minutes/ after 60 minutes | Antibody adsorption rate [%] After 5 minutes | Antibody adsorption rate [%] After 60 minutes | Antibody adsorption rate [%] After 5 minutes/ after 60 minutes | Virus concentration [$TCID_{50}/mL$] |
|---|---|---|---|---|---|---|---|---|---|---|---|---|---|---|---|
| Example | 1 | 6.46 | $7.1\times10^{-3}$ | 1.43 | 79 | 0.027 | 24 | 735 | 50 | 72 | 70 | 50 | 64 | 78 | $< 10^{1.5}$ |
| | 2 | 8.14 | $8.2\times10^{-3}$ | 1.96 | 44 | 0.017 | 25 | 734 | 71 | 90 | 79 | 60 | 72 | 83 | $< 10^{1.5}$ |
| | 3 | 8.22 | $8.6\times10^{-3}$ | 2.29 | 21 | 0.013 | 23 | 897 | 77 | 92 | 84 | 55 | 65 | 84 | $10^{2.1}$ |
| | 4 | 8.53 | $8.9\times10^{-3}$ | 2.76 | 33 | 0.011 | 26 | 920 | 82 | 95 | 86 | 70 | 80 | 87 | $< 10^{1.5}$ |
| | 5 | 8.21 | $8.5\times10^{-3}$ | 2.05 | 44 | 0.068 | 29 | 760 | 65 | 86 | 76 | 52 | 67 | 78 | $< 10^{1.5}$ |
| | 6 | 7.14 | $7.5\times10^{-3}$ | 1.76 | 14 | 0.019 | 25 | 859 | 71 | 85 | 84 | 45 | 58 | 78 | $< 10^{1.5}$ |
| | 7 | 6.36 | $6.8\times10^{-3}$ | 1.58 | 28 | 0.037 | 28 | 659 | 54 | 72 | 75 | 39 | 58 | 68 | $10^{2.1}$ |
| | 8 | 7.24 | $7.6\times10^{-3}$ | 1.56 | 195 | 0.033 | 26 | 642 | 51 | 65 | 78 | 59 | 72 | 82 | $< 10^{1.5}$ |
| Comparative Example | 1 | 3.82 | $4.2\times10^{-3}$ | 2.33 | 21 | 0.005 | 23 | 892 | 36 | 85 | 42 | 20 | 68 | 30 | $10^{2.5}$ |
| | 2 | 5.35 | $5.7\times10^{-3}$ | 0.75 | 171 | 0.116 | 25 | 544 | 24 | 36 | 67 | 29 | 42 | 70 | $10^{3.8}$ |
| | 3 | 1.16 | $1.2\times10^{-3}$ | 1.44 | 10 | 0.118 | 5 | 1096 | 13 | 45 | 28 | 4 | 16 | 25 | $10^{4.5}$ |
| | 4 | 1.93 | $2.0\times10^{-3}$ | 1.05 | 3 | 0.348 | 33 | 1374 | 5 | 19 | 25 | 1 | 3 | 18 | $10^{4.7}$ |

It can be seen that the porous carbons of Examples 1 to 8 are all porous carbons that can exhibit high adsorption characteristics for albumin, antibodies, and feline calicivirus even when the adsorption time is short. On the other hand, the porous carbons of Comparative Examples 1 to 4 are insufficient in adsorption characteristics for albumin, antibodies, and feline calicivirus.

INDUSTRIAL APPLICABILITY

The porous carbon of the present invention has high adsorption characteristics for molecules or viruses which have a relatively large diameter (for example, 2 to 200 nm). Therefore, it can be suitably used as an adsorbent for adsorbing such molecules.

## Claims

1. Porous carbon in which a slope of an approximate straight line obtained by converting a change in pressure of nitrogen until reaching an adsorption equilibrium at each prescribed relative pressure in measurement of a nitrogen adsorption isotherm into a mass transfer coefficient using the LDF approximation and linearly approximating a relationship between a relative pressure and a mass transfer coefficient at a relative pressure of $1.0 \times 10^{-4}$ or more and $1.0 \times 10^{-3}$ or less is 4 or more, and
   a pore volume of pores having a pore diameter of 2 nm or more and 200 nm or less calculated from the nitrogen adsorption isotherm by a BJH method is 0.8 $cm^3/g$ or more.

2. The porous carbon according to claim 1, wherein a value of a mass transfer coefficient at a relative pressure of $1.0 \times 10^{-3}$ is $3.0 \times 10^{-3}$ or more on the approximate straight line.

3. The porous carbon according to claim 1 or 2, wherein the porous carbon has a bulk density of less than 0.10 $g/cm^3$.

4. A method for producing the porous carbon according to claim 1 or 2, the method comprising:

   (1) a step of obtaining a mixture comprising a carbon source and a calcium compound;
   (2) a step of heat-treating the mixture in an inert gas atmosphere to phase-separate the carbon source and the calcium compound;
   (3) a step of heat-treating the phase-separated mixture in an inert gas atmosphere to obtain a carbonized product; and
   (4) a step of removing the calcium compound from the carbonized product.

5. The method according to claim 4, wherein a temperature in the phase separation step of the step (2) is 150°C or more and 500°C or less.

6. The porous carbon according to claim 1 or 2, which is an adsorbent.

7. The porous carbon according to claim 1 or 2, which is an adsorbent for adsorbing a protein.

8. The porous carbon according to claim 1 or 2, which is an adsorbent for adsorbing a virus.

[Figure 1]

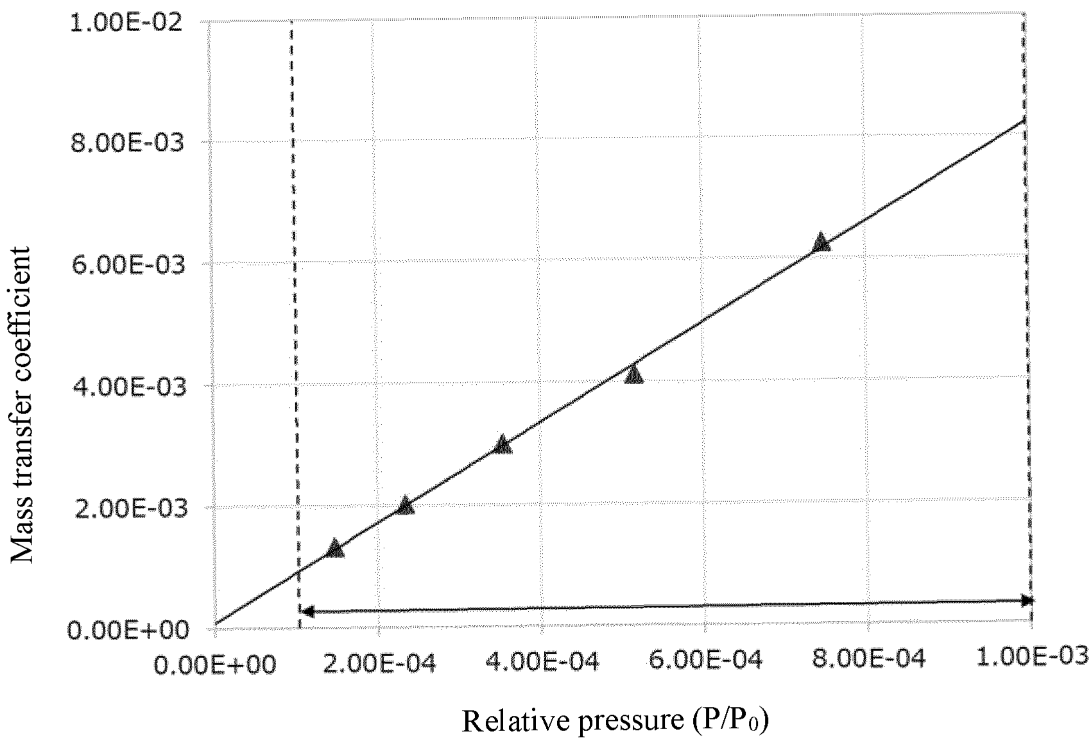
1.00E-02
8.00E-03
6.00E-03
4.00E-03
2.00E-03
0.00E+00
Mass transfer coefficient
0.00E+00
2.00E-04
4.00E-04
6.00E-04
8.00E-04
1.00E-03
Relative pressure (P/P0)

## INTERNATIONAL SEARCH REPORT

International application No.
**PCT/JP2023/026518**

**A. CLASSIFICATION OF SUBJECT MATTER**

***C01B 32/05***(2017.01)i; ***B01J 20/20***(2006.01)i; ***B01J 20/28***(2006.01)i; ***B01J 20/30***(2006.01)i
FI: C01B32/05; B01J20/20 B; B01J20/28 Z; B01J20/30

According to International Patent Classification (IPC) or to both national classification and IPC

**B. FIELDS SEARCHED**

Minimum documentation searched (classification system followed by classification symbols)

C01B32/00-32/991; B01J20/00-20/34

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2014/142187 A1 (TOYO TANSO COMPANY, LIMITED) 18 September 2014 (2014-09-18)<br>entire text, all drawings | 1-8 |
| A | CN 106904613 A (CHANGZHOU ADVANCED MATERIAL INSTITUTE OF BEIJING UNIVERSITY OF CHEMICAL TECHNOLOGY) 30 June 2017 (2017-06-30)<br>entire text, all drawings | 1-8 |
| A | CN 105621385 A (CHINA PETROLEUM & CHEMICAL CORPORATION) 01 June 2016 (2016-06-01)<br>entire text, all drawings | 1-8 |
| A | CN 106379881 A (TIANJIN POLYTECHNIC UNIVERSITY) 08 February 2017 (2017-02-08)<br>entire text, all drawings | 1-8 |
| A | JP 2012-187571 A (SONY CORPORATION) 04 October 2012 (2012-10-04)<br>entire text, all drawings | 1-8 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 September 2023** | **03 October 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2023/026518**

**C. DOCUMENTS CONSIDERED TO BE RELEVANT**

| Category* | Citation of document, with indication, where appropriate, of the relevant passages | Relevant to claim No. |
|---|---|---|
| A | JP 2006-265091 A (EQUOS RESEARCH COMPANY, LIMITED) 05 October 2006 (2006-10-05) entire text, all drawings | 1-8 |

Form PCT/ISA/210 (second sheet) (January 2015)

**INTERNATIONAL SEARCH REPORT**
**Information on patent family members**

International application No.
**PCT/JP2023/026518**

| Patent document cited in search report | Publication date (day/month/year) | Patent family member(s) | Publication date (day/month/year) |
|---|---|---|---|
| WO 2014/142187 A1 | 18 September 2014 | US 2015/0367323 A1<br>entire text, all drawings<br>EP 2975002 A1<br>CA 2899135 A1<br>CN 104968603 A<br>BR 112015021122 A | |
| CN 106904613 A | 30 June 2017 | (Family: none) | |
| CN 105621385 A | 01 June 2016 | (Family: none) | |
| CN 106379881 A | 08 February 2017 | (Family: none) | |
| JP 2012-187571 A | 04 October 2012 | US 2013/0324398 A1<br>entire text, all drawings<br>WO 2012/114662 A1<br>EP 2664375 A1<br>CN 103370127 A<br>BR 112013020756 A | |
| JP 2006-265091 A | 05 October 2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022119926 A
- JP 2011042569 A
- JP 2012187571 A
- JP 2018001057 A
- WO 2014142187 A
- JP 2016041656 A